(19) Europäisches Patentamt
European Patent Office
Office européen des brevets

(11) **EP 3 201 519 B1**

(12) **FASCICULE DE BREVET EUROPEEN**

(45) Date de publication et mention de la délivrance du brevet:
**07.12.2022 Bulletin 2022/49**

(21) Numéro de dépôt: **15771975.8**

(22) Date de dépôt: **02.10.2015**

(51) Classification Internationale des Brevets (IPC):
*F21S 41/141* (2018.01)   *F21S 41/16* (2018.01)
*F21S 41/663* (2018.01)

(52) Classification Coopérative des Brevets (CPC):
**F21S 41/141; F21S 41/16; F21S 41/18; F21S 41/663**

(86) Numéro de dépôt international:
**PCT/EP2015/072858**

(87) Numéro de publication internationale:
**WO 2016/050971 (07.04.2016 Gazette 2016/14)**

(54) **SYSTEME D'ECLAIRAGE A PROFIL D'INTENSITE OPTIMISE POUR PROJECTEUR DE VEHICULE AUTOMOBILE**

BELEUCHTUNGSSYSTEM MIT OPTIMIERTEM INTENSITÄTSPROFIL FÜR KRAFTFAHRZEUGSCHEINWERFER

LIGHTING SYSTEM WITH OPTIMISED INTENSITY PROFILE FOR MOTOR VEHICLE HEADLIGHT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **02.10.2014  FR 1459454**

(43) Date de publication de la demande:
**09.08.2017  Bulletin 2017/32**

(73) Titulaire: **Valeo Vision**
**93012 Bobigny Cedex (FR)**

(72) Inventeurs:
• **COURCIER, Marine**
**93012 BOBIGNY Cedex (FR)**
• **SANCHEZ, Vanesa**
**92270 Bois Colombes (FR)**

(74) Mandataire: **Valeo Visibility**
**Service Propriété Industrielle**
**c/o Valeo Vision**
**34, rue Saint André**
**93012 Bobigny (FR)**

(56) Documents cités:
WO-A1-2014/037320     DE-A1-102008 044 968
JP-A- 2014 168 985     US-A1- 2011 026 266
US-A1- 2013 021 810    US-A1- 2014 043 843

EP 3 201 519 B1

**Description**

L'invention concerne un système d'éclairage tel qu'un projecteur pour véhicule automobile.

Il est connu de prévoir sur un véhicule automobile diverses fonctions d'éclairage « feux de route » et une seconde fonction « feux de croisement ». La première fonction fournit un éclairage de toute la largeur de la route devant le véhicule. La seconde fonction fournit un éclairage de la voie dans laquelle se trouve le véhicule et un éclairage modéré de la voie située à côté et dans laquelle des véhicules sont susceptibles de circuler en sens inverse afin de limiter les risques d'éblouissement. Toutefois, il est généralement souhaité que la seconde fonction d'éclairage prévoie de limiter encore plus les risques d'éblouissement du conducteur d'un véhicule circulant sur une voie adjacente. On a donc proposé dans l'état de la technique une fonction de feu adaptatif qui permet d'éclairer à grande distance et de maintenir non éclairées, sélectivement et dynamiquement, certaines parties de la scène située devant le véhicule et en particulier les véhicules circulant sur la voie adjacente. A cette fin, un dispositif d'observation analyse la scène et sélectionne les zones qui doivent être maintenues non éclairées.

Pour cela, il est connu notamment de découper fictivement cette scène en plusieurs bandes rectangulaires verticales qui sont éclairées sélectivement suivant les parties de la scène que l'on souhaite éclairer (le même type de fonctionnement peut être mis en œ uvre avec une disposition matricielle, c'est-à-dire en colonnes et en lignes, des différentes zones de la scène à éclairer sélectivement). Un tel système est apte à produire un faisceau lumineux sélectif formé par des bandes lumineuses rectangulaires juxtaposées. Un système d'éclairage apte à former une bande lumineuse rectangulaire est par exemple décrit dans les documents JP2010232044 A et EP-2 278 217.

Le choix des sources de lumière équipant un tel système est soumis à différentes contraintes, notamment le respect du cahier des charges établi par le constructeur du véhicule. Ce cahier des charges comprend généralement une demande de style imposant des dimensions maximales pour le système d'éclairage et donc pour les moyens optiques destinés à générer les bandes lumineuses, ainsi qu'un profil idéal de l'intensité lumineuse du faisceau en fonction de l'angle horizontal mesuré entre la direction d'émission d'un rayon considéré du faisceau lumineux et la direction de marche du véhicule. Le respect du cahier des charges implique que le profil en intensité du faisceau lumineux réellement généré par le système d'éclairage soit supérieur ou égal au profil idéal. Le profil idéal a approximativement la forme d'une courbe en cloche dans la plupart des cas.

Afin de respecter cette contrainte, une solution immédiate est de choisir toutes les sources de lumière de forte luminance, capables de former des taches lumineuses de forte intensité lumineuse. Lorsque toutes les sources de lumière sont alimentées à leur courant nominal, le faisceau lumineux a alors un profil en intensité lumineuse rectangulaire dans lequel est inscrit le profil idéal. Cependant, dans cette solution, la puissance installée dans le système d'éclairage, définie comme étant la puissance lumineuse générée dans le faisceau si toutes les sources de lumière sont alimentées à leur courant nominal, est excessivement élevée. Or, les sources de lumière à forte luminance sont généralement plus onéreuses que celles ayant une luminance modérée. Cela signifie qu'on surdimmensionne vainement le système d'éclairage, qui n'est ainsi pas optimisé, et que le coût de production d'un tel système est inutilement accru.

De plus, un tel profil rectangulaire génère un contraste très important en luminosité aux extrémités latérales du faisceau, ce qui gêne la vision de la scène pour le conducteur. En effet, dans ce cas, aux extrémités latérales du faisceau, l'intensité lumineuse passe brutalement d'une valeur très élevée à une valeur presque nulle sur une faible plage angulaire. Pour pallier ce problème, on peut alimenter les sources de lumière destinées à former les taches lumineuses des bords du faisceau par un courant notablement inférieur au courant nominal, de sorte que le contraste soit atténué et que les transitions d'intensité lumineuses soient moins abruptes. Mais cela engendre une chute du rendement d'utilisation du système, qui est défini comme étant le rapport de la puissance lumineuse générée par le faisceau sur la puissance installée. Il est en effet intéressant d'alimenter un nombre maximal de sources de lumière avec un courant le plus proche possible de leur courant nominal. Par ailleurs, cette solution ne permet pas de résoudre le problème du surdimensionnement inutile du système d'éclairage.

On pourrait alors envisager d'imposer que toutes les sources de lumière soient du type de luminance modérée, telles que des diodes électroluminescentes. Mais cela n'est pas une condition suffisante pour respecter le cahier des charges, en particulier lorsque les dimensions des moyens optiques associés aux sources de lumière sont limitées par le style ou encore, lorsque le profil idéal d'intensité à atteindre est trop élevé. Cette solution n'est donc pas satisfaisante.

Un but de l'invention est de former un faisceau sélectif au moyen d'un système d'éclairage dont le rendement d'utilisation est le plus élevé possible, le profil du faisceau correspondant toujours au moins au profil idéal imposé.

A cet effet, on prévoit selon l'invention un système d'éclairage pour véhicule automobile, pour émettre un faisceau lumineux comprenant au moins deux zones éclairées chacune générée par au moins une source de lumière et des moyens optiques agencés de manière à former une tache lumineuse à partir de la lumière émise par la source de lumière, chaque tache ayant une forme générale de bande lumineuse, notamment de forme générale rectangulaire,

remarquable en ce qu'il comprend au moins deux types de sources de lumière, appelés premier et deuxième types de sources de lumière, les sources de lumière d'un même type ayant sensiblement une même luminance, et

la luminance d'une source de lumière du premier type étant 2 à 10 fois supérieure à celle d'une source de lumière du deuxième type.

Ainsi, le système comprenant deux types de sources de lumière à luminances notablement différentes, on peut utiliser des sources de lumière à faible luminance dans les zones où l'intensité lumineuse désirée est relativement faible, et des sources de lumière à forte luminance dans la zone où l'intensité lumineuse désirée est plus élevée. Cela permet réduire la puissance installée dans le système d'éclairage, tout en respectant le profil idéal donné dans le cahier des charges. De plus, un plus grand nombre de sources de lumière fonctionne à un courant plus proche de leur courant nominal par rapport à un système comprenant uniquement des sources de lumière à forte luminance. On augmente de cette manière le rendement d'utilisation du système.

Avantageusement, la luminance d'une source de lumière du premier type est 3 à 5 fois supérieure à celle d'une source de lumière du deuxième type.

Ce rapport de luminances entre les deux types de sources de lumière permet d'obtenir un profil en intensité du faisceau lumineux particulièrement optimal.

Selon l'invention, les taches lumineuses sont toutes de formes sensiblement identiques et sensiblement parallèles à une direction principale commune.

Le faisceau lumineux a ainsi une forme générale de rectangle et est subdivisé en bandes rectangulaires sensiblement parallèles. On commande ainsi aisément l'extinction des sources de lumière formant les taches lumineuses couvrant les zones à maintenir non éclairées.

De préférence, les taches lumineuses se superposent partiellement.

On augmente ainsi l'intensité lumineuse et l'homogénéité que l'on peut donner au faisceau avec des sources de lumière imposées. On améliore également la résolution du faisceau lumineux, c'est-à-dire la plus petite taille de zone du faisceau lumineux dont on maitrise l'extinction, ce qui permet d'améliorer l'extinction dynamique des zones de la scène à maintenir non éclairées.

De préférence, deux taches lumineuses consécutives du faisceau lumineux se superposent sur la moitié de la largeur des taches lumineuses.

Ainsi, on définit une large zone du faisceau dans laquelle en tout point, deux taches lumineuses se superposent pour augmenter l'intensité du faisceau lumineux.

Avantageusement, le faisceau comprend au moins une zone dans laquelle il est constitué d'une alternance régulière de taches formées par des sources du premier type et de taches formées par des sources du deuxième type.

On crée ainsi une zone du faisceau lumineux dans laquelle l'intensité est inférieure à celle des taches lumineuses formées par les sources de lumières du premier type et supérieure à celle des taches lumineuses formées par les sources de lumière du deuxième type. Cela permet de réduire davantage la puissance installée dans le système d'éclairage tout en respectant le profil idéal donné dans le cahier des charges.

Avantageusement, les sources de lumière du premier type sont des diodes laser.

Avantageusement, les sources de lumière du deuxième type sont des diodes électroluminescentes.

Ces sources de lumière permettent de former les deux types de sources de lumière respectant la différence de luminance définie plus haut.

Avantageusement, le faisceau comprend, à au moins une de ses deux extrémités latérales, une tache lumineuse étendue de largeur supérieure à celle des autres taches lumineuses.

Cette tache lumineuse étendue forme une zone du faisceau dont il n'est habituellement pas besoin de régler l'intensité. On limite ainsi le nombre de sources de lumière que doit comprendre le système d'éclairage, ce qui permet de limiter le coût de production du système.

L'invention sera mieux comprise à la lecture de la description qui va suivre donnée uniquement à titre d'exemple et faite en référence aux dessins dans lesquels :

- la figure 1 est une vue en perspective d'un système d'éclairage selon l'invention,
- la figure 2 illustre le faisceau lumineux généré par le système d'éclairage de la figure 1, tel qu'il apparaît sur une surface s'étendant perpendiculairement à la direction de déplacement d'un véhicule dans lequel le système d'éclairage est monté,
- la figure 3 est un schéma illustrant l'agencement de taches lumineuses formant le faisceau lumineux,
- la figure 4 est un graphique montrant d'une part, l'évolution de l'intensité du faisceau lumineux en fonction de l'azimut de ce faisceau coïncidant avec le profil de l'intensité installée nécessaire au minimum pour respecter le cahier des charges, et d'autre part le profil d'intensité idéal imposé par le cahier des charges auquel le profil du faisceau réel doit correspondre au mieux, et
- la figure 5 illustre un paramètre $\Delta$ du système d'éclairage de la figure 1.

Dans ce qui suit, on considère un repère orthogonal R (O, x, y, z) associé à un véhicule automobile, dans lequel O est un point du véhicule, x et y sont les coordonnées le long des axes horizontaux X et Y, correspondant respectivement à la direction de déplacement du véhicule et à la direction perpendiculaire à celle-ci, et z est la coordonnée le long de l'axe Z vertical.

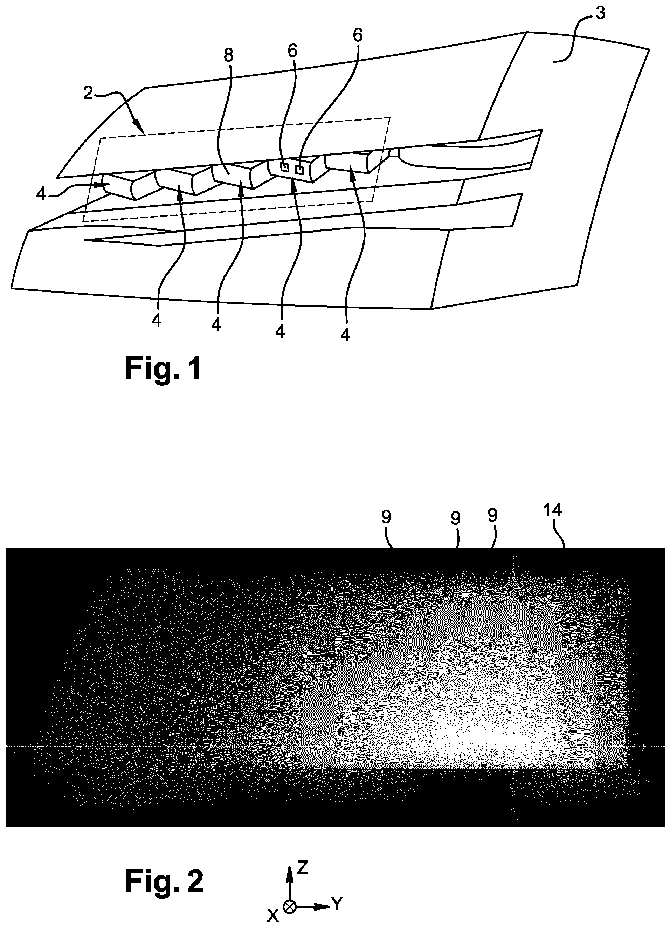

On a illustré en figure 1 un système d'éclairage 2 selon l'invention monté sur un véhicule automobile dont on a représenté une partie de la carrosserie 3. Le système d'éclairage 2 forme le projecteur gauche du véhicule et présente un axe principal du système d'éclairage sensiblement parallèle à la direction X. Le système d'éclairage 2 comprend au moins deux modules d'éclairage 4 comportant chacun au moins une source de lumière 6 et des moyens optiques 8 agencés de manière à former une tache lumineuse 9 à partir de la lumière émise par la source de lumière 6. Ces modules d'éclairage 4 sont connus en soi. L'homme du métier pourra se référer à EP-2 278 217 pour réaliser de tels modules d'éclairage.

Le système 2 comprend au moins deux types de sources de lumière, appelés premier et deuxième types de sources de lumière, les sources de lumière 6 d'un même type ayant sensiblement une même luminance. Les sources de lumière 6 du premier type sont toutes des diodes laser, et les sources de lumière 6 du deuxième type sont toutes des diodes électroluminescentes. De la sorte, la luminance de chaque source de lumière 6 du premier type est 2 à 10 fois supérieure à celle de chaque source de lumière 6 du deuxième type. La luminance d'une source de lumière 6 du premier type est plus précisément 3 à 5 fois supérieure à celle d'une source de lumière 6 du deuxième type. On pourra toutefois prévoir d'utiliser des sources de lumière 6 différentes de celles énoncées ci-dessus. Les sources de lumière 6 d'un même type forment, grâce au moyens optiques 8, des taches lumineuses 9 sensiblement identiques, si bien que l'on peut parler de taches 9 du premier type et de taches du deuxième type. On verra dans la suite pourquoi il est intéressant que le système d'éclairage 2 comporte les deux types de sources de lumière. Les sources de lumière 6 d'un même module d'éclairage 4 peuvent être du même type, ou bien appartenir aux deux types. Dans ce dernier cas, on qualifiera le module 4 d'hybride.

Un faisceau lumineux 14 généré par le système d'éclairage 2 est illustré en figure 2. Le faisceau lumineux 14 est formé par la réunion des taches lumineuses 9 générées par les modules d'éclairage 4. Les taches lumineuses 9 ont chacune une forme générale de bande lumineuse, notamment de forme générale rectangulaire. Les taches lumineuses 9 sont toutes de formes sensiblement identiques et sensiblement parallèles à une direction principale commune, qui est ici la direction verticale Z.

Le faisceau lumineux 14 est découpé en bandes lumineuses rectangulaires 9. Afin qu'il forme un faisceau sélectif, c'est-à-dire apte à maintenir non éclairées certaines zones de la scène éclairée devant le véhicule, le système d'éclairage comprend à cet effet des organes classiques de détection et de commande (non représentés sur les figures). Ces organes de détection et de commande sont respectivement aptes

- à détecter des zones de la scène devant le véhicule à maintenir non éclairées, et
- à commander les sources de lumière 6 afin d'éteindre celles formant les taches lumineuses 9 couvrant les zones à maintenir non éclairées. On réalise de la sorte un faisceau lumineux 14 dit sélectif.

Comme illustré dans la figure 2, le faisceau 14 est complété par un faisceau en forme de voile de navire, qui fournit un éclairage d'ambiance.

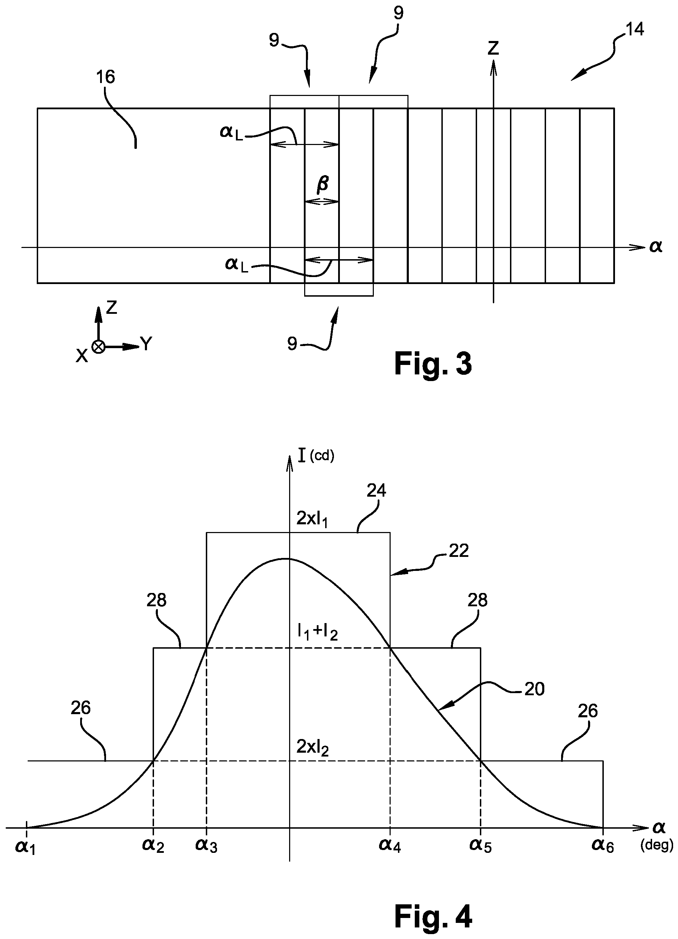

En référence à la figure 3, les taches lumineuses 9 du faisceau lumineux 14 se superposent partiellement. On suppose ici que toutes les taches lumineuses 9 sont toutes de forme générale rectangulaire et de dimensions sensiblement identiques, les bords de taches lumineuses étant légèrement flous, et que la superposition est régulière. Cela signifie que toute tache 9 présente une largeur angulaire, prise par rapport à l'axe Z, $\alpha = \alpha_L$ prédéterminée, et définie habituellement comme étant sensiblement égale à la largeur à mi-hauteur du profil d'intensité de la tache 9, à la dimension du flou entourant les taches lumineuses 9 près, et que quelque soient deux taches lumineuses 9 adjacentes, la largeur d'une région de superposition de ces deux taches adjacentes 9 dans le faisceau 14 prend une valeur prédéterminée fixée. On définit un facteur de superposition k, comme étant la valeur de $\alpha_L$ rapportée à la largeur angulaire de la région de superposition de deux taches lumineuses 9 adjacentes. On choisira préférentiellement un facteur de superposition k comme étant un entier naturel non nul et uniforme le long de l'axe Y.

Le fait de choisir une valeur de k entière et strictement supérieure à 1 présente l'avantage d'améliorer la résolution du faisceau lumineux 14, c'est-à-dire de réduire la la valeur du paramètre $\beta$. Ce paramètre $\beta$ est défini par la largeur de la plus petite zone du faisceau 14 dont on peut maîtriser l'extinction au moyen de l'organe de commande. En d'autres termes, $\beta$ est égal à la largeur angulaire d'un pixel du faisceau lumineux 14. Lorsque k est choisi entier, la valeur du paramètre $\beta$ est égale à la valeur de $\alpha_L$ rapporté au facteur de superposition k.

Dans l'exemple représenté en figure 3, deux taches lumineuses 9 consécutives du faisceau lumineux 14 se superposent sur la moitié de la largeur angulaire $\alpha_L$ des taches lumineuses 9. En d'autres termes, k = 2 et $\beta = \alpha_L / 2$. A titre d'exemple, le cas k = 1 correspondrait au cas où les taches lumineuses 9 seraient contiguës.

L'extrémité latérale gauche du faisceau lumineux 14 est formée par une tache lumineuse étendue 16. Celle-ci a la particularité d'être la seule tache de forme différente des autres taches lumineuses 9, notamment de dimensions différentes. Si elle présente la même hauteur que les autres taches lumineuses 9, la tache étendue 16 présente une largeur supérieure à celle des autre taches lumineuses 9 qui, on le rappelle, présentent des formes et des dimensions identiques. Sur la figure 3, la tache lumineuse étendue 16 est située à l'extrémité gauche du faisceau lumineux 14.

Le faisceau lumineux 14 illustré étant celui réalisé par le système d'éclairage 2 équipant le projecteur gauche du véhicule, la tache lumineuse étendue 16 éclaire vers l'extérieur en considérant la direction de déplacement X du véhicule, c'est-à-dire en direction de véhicules pouvant circuler en sens inverse sur une voie adjacente. De plus, la tache étendue 16 présente une intensité lumineuse modérée, car elle est formée par une source de lumière du deuxième type. Cela permet de limiter le contraste, au sens ou la transition d'intensité lumineuse entre la zone non éclairée et la tache étendue 16 est relativement douce.

On a représenté en figure 4 par un premier contour 20 un profil en intensité idéal imposé et par un second contour 22 un profil réel en intensité du faisceau lumineux 14 obtenu lorsque toutes les sources de lumière 6 sont alimentées à leur courant nominal. Les profils 20, 22 représentent l'évolution de l'intensité lumineuse en fonction de l'azimut $\alpha$ correspondant à la largeur angulaire prise par rapport à l'axe Z. Ces profils en intensité I sont donc mesurés le long de l'axe Y. L'invention a pour objectif de faire correspondre au mieux le profil réel 22 du faisceau lumineux 14 au profil idéal 20.

Le profil idéal 20 a généralement la forme d'une courbe en cloche, mais on pourra prévoir qu'on impose un profil idéal présentant une toute autre forme.

On rappelle que k prend ici aussi une valeur égale à 2.

Le profil réel 22 a la forme d'une fonction constante par morceaux ou fonction en créneaux. Plus précisément, le profil réel 22 présente un palier central 24 d'intensité $k.I_1$, correspondant à la zone du faisceau 14 générée par les sources de lumière 6 du premier type. Le profil réel 22 présente aussi deux paliers latéraux 26 d'intensité $k.I_2$, correspondant aux zones du faisceau 14 générées par les sources de lumière 6 du deuxième type. Enfin, le profil réel 22 présente deux paliers intermédiaires 28 d'intensité $k.(I_1 + I_2) / 2$, s'étendant chacun entre le palier central 24 et un des deux paliers latéraux 26. Les paliers intermédiaires 28 correspondent aux zones, dites mixtes, du faisceau 14 dans lesquelles le faisceau 14 est constitué d'une alternance régulière de taches 9 formées par des sources du premier type et de taches 9 formées par des sources 8 du deuxième type. On pourra toutefois prévoir que les paliers intermédiaires 28 n'existent pas, de sorte que le palier central 24 soit juxtaposé aux deux paliers latéraux 26.

Les valeurs de $I_1$ et $I_2$ dépendent évidemment des luminances des sources de lumière 6 des premier et deuxième types, mais également des contraintes de style du cahier des charges et donc de la taille imposée pour les moyens optiques associés à chaque type de source. Ainsi, une réduction de la taille des moyens optiques 8 des modules d'éclairage 4 entraine la réduction de l'intensité lumineuse des taches lumineuses 9 formées. Il va de soi dans le contexte de la présente invention que toutes les sources d'un même type ont une intensité I sensiblement identique, aux tolérances de fabrication près, résultant d'une combinaison de la luminance définie pour le type de source considéré avec une taille de moyens optiques donnée, homogène, qui est la même pour toutes les sources d'un type. Pour des raisons de choix de style, la taille des moyens optiques pour les deux types de source peut être la même ou bien être différente.

Les profils idéal 20 et réel 22 tels qu'illustrés en figure 4 présentent des points communs qui correspondent à une réalisation optimisée du faisceau lumineux réel 14. En effet, ces points marquent des seuils d'intensité nécessaire et suffisante en deçà desquelles les paliers 24, 26, 28 ne peuvent pas être abaissés davantage sans que l'intensité du faisceau 14 ne devienne insuffisante localement. De plus, le fait que le profil réel 22 soit en tout point supérieur ou égal au profil idéal 20 indique le respect du cahier des charges imposé.

On va maintenant détailler, en se référant à l'exemple décrit, la méthode de détermination des nombres optimaux de sources de lumière 6 du premier type et du deuxième type, ainsi que les étendues des différents paliers 24, 26, 28, le profil idéal 20 étant imposé et la taille des moyens optiques associés à chaque type de source étant également imposée..

Le procédé décrit ci-après vise à dimensionner le système d'éclairage 2 de façon optimisée en déterminant le nombre minimal de sources de lumière 6 du premier type, nécessaire pour respecter le cahier des charges, afin de minimiser le coût et la puissance installée, c'est-à-dire la puissance disponible « en réserve » ou potentiellement atteignable qui est obtenue lorsque toutes les sources sont alimentées à leur courant nominal. Dans certains cas et afin de simplifier le système d'éclairage 2 en limitant le nombre de pièces distinctes en vue d'une standardisation des modules 4 qu'il comprend, il sera envisageable d'augmenter le ratio entre le nombre de sources de lumière 6 de forte luminance et le nombre de sources de lumière 6 de luminance modérée.

Les formules de calcul ont été établies pour un mode de réalisation préféré, où les bandes lumineuses 9 se superposent sur la moitié de leur largeur angulaire (autrement dit, k = 2). Une transposition directe de ce procédé permettra à l'homme de l'art de traiter les cas où k prend d'autres valeurs, par exemple 1 ou 3.

On se place dans le contexte d'une forme classique de profil demandé par le cahier des charges, à savoir une courbe en cloche. On prendra ici également l'hypothèse que la taille des moyens optiques associés à un type de source est homogène pour le type de source considéré.

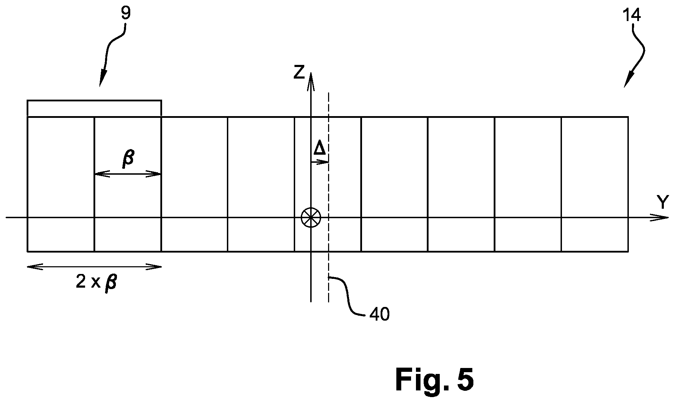

On utilise dans la suite les notations employées dans les figures 4 et 5. Un paramètre $\Delta$ du système d'éclairage 2 est notamment illustré en figure 5. Le paramètre $\Delta$ est la distance entre l'axe Z et le centre du pixel éclairant dans l'axe du système d'éclairage. Le centre du pixel est représenté par un trait en pointillé 40.

Dans ce qui suit, on note $\lceil x \rceil$ la partie entière par excès d'un nombre réel x.

Les angles $\alpha_1$ et $\alpha_6$ délimitent l'étendue totale de la zone du faisceau lumineux 14 à couvrir à l'aide des bandes lumineuses 9.

Les angles $\alpha_2$ et $\alpha_5$ délimitent l'étendue de la zone du faisceau lumineux 14 pour laquelle l'intensité requise par le cahier des charges est supérieure à $2I_2$. Dans cette zone, $2I_2$ n'est pas suffisant en puissance installée pour respecter le cahier des charges. Il faut donc une puissance installée de $I_1 + I_2$.

Les angles $\alpha_3$ et $\alpha_4$ délimitent l'étendue de la zone du faisceau lumineux 14 pour laquelle l'intensité requise par le cahier des charges est supérieure à $I_1 + I_2$. Dans cette zone, $I_1 + I_2$ n'est pas suffisant en puissance installée pour respecter le cahier des charges. Il faut donc une puissance installée de $2I_1$.

On appelle $I_{max}$ la valeur maximale de l'intensité du profil idéal 20 défini par le cahier des charges.

Conditions d'existence des formules de calcul :

$$\alpha_3 \leq 0 \leq \alpha_4 :$$

Dans le cas où cette condition ne serait pas remplie, on opèrera un changement de repère pour s'y rapporter.

$\alpha_1 \leq \alpha_2 \leq \alpha_3$ et $\alpha_4 \leq \alpha_5$ pour la zone mixte

$\alpha_1 \leq \alpha_2$ *et* $\alpha_5 \leq \alpha_6$ pour la zone LED

$$\text{Cas } 1 : I_1 + I_2 < I_{max} \leq 2I_1$$

Ce cas décrit l'existence d'une zone du faisceau lumineux 14 intégralement formée par des sources de lumière 6 du premier type.

Nombre total de sources du deuxième type.

Le nombre total de sources de lumière 6 du deuxième type est donné par la somme du nombre de sources du deuxième type dans la zone du faisceau lumineux entièrement formé par des sources du deuxième type et du nombre de sources du deuxième type dans la zone mixte.

Nombre de sources du deuxième type dans la zone entièrement formée par des sources du deuxième type :

$$\left\lceil \frac{\frac{\beta}{2}+\Delta-\alpha_1}{\beta} \right\rceil - \left\lceil \frac{\frac{\beta}{2}+\Delta-\alpha_2}{\beta} \right\rceil - 1 + \left\lceil \frac{\alpha_6-\frac{\beta}{2}-\Delta}{\beta} \right\rceil - \left\lceil \frac{\alpha_5-\frac{\beta}{2}-\Delta}{\beta} \right\rceil - 1$$

Nombre de sources du deuxième type d'un premier côté de la zone mixte :

$$1 + \frac{1}{2}\left( \left\lceil \frac{\frac{\beta}{2}+\Delta-\alpha_2}{\beta} \right\rceil - \left\lceil \frac{\frac{\beta}{2}+\Delta-\alpha_3}{\beta} \right\rceil - 1 \right)$$

Si le nombre de pixels entre $\propto_2$ et $\propto_3$ est pair :

$$\frac{1}{2}\left( \left\lceil \frac{\frac{\beta}{2}+\Delta-\alpha_2}{\beta} \right\rceil - \left\lceil \frac{\frac{\beta}{2}+\Delta-\alpha_3}{\beta} \right\rceil \right)$$

Si le nombre de pixels entre $\propto_2$ et $\propto_3$ est impair :

Nombre de sources du deuxième type d'un second côté de la zone mixte :

$$1 + \frac{1}{2}\left( \left\lceil \frac{\frac{\beta}{2}+\Delta-\alpha_5}{\beta} \right\rceil - \left\lceil \frac{\frac{\beta}{2}+\Delta-\alpha_6}{\beta} \right\rceil - 1 \right)$$

Si le nombre de pixels entre $\propto_5$ et $\propto_6$ est pair :

$$\frac{1}{2}\left( \left\lceil \frac{\frac{\beta}{2}+\Delta-\alpha_5}{\beta} \right\rceil - \left\lceil \frac{\frac{\beta}{2}+\Delta-\alpha_6}{\beta} \right\rceil \right)$$

Si le nombre de pixels entre $\propto_5$ et $\propto_6$ est impair :

Nombre total de sources du premier type.

Le nombre total de sources de lumière 6 du premier type est donné par la somme du nombre de sources du premier type dans la zone entièrement formée par des sources du premier type et du nombre de sources du premier type dans la zone mixte.

Nombre de sources du premier type la zone entièrement formée par des sources du premier type :

$$\left\lceil \frac{\frac{\beta}{2}+\Delta-\alpha_3}{\beta} \right\rceil + \left\lceil \frac{\alpha_4-\frac{\beta}{2}-\Delta}{\beta} \right\rceil + 1$$

Nombre de sources du premier type d'un premier côté de la zone mixte :

Si le nombre de pixels entre $\propto_2$ et $\propto_3$ est pair :
$$\frac{1}{2}\left( \left| \left\lceil \frac{\frac{\beta}{2}+\Delta-\alpha_2}{\beta} \right\rceil - \left\lceil \frac{\frac{\beta}{2}+\Delta-\alpha_3}{\beta} \right\rceil \right| \right)$$

Si le nombre de pixels entre $\propto_2$ et $\propto_3$ est impair :
$$\frac{1}{2}\left( \left| \left\lceil \frac{\frac{\beta}{2}+\Delta-\alpha_2}{\beta} \right\rceil - \left\lceil \frac{\frac{\beta}{2}+\Delta-\alpha_3}{\beta} \right\rceil \right| - 1 \right)$$

Nombre de sources du premier type d'un second côté de la zone mixte :

Si le nombre de pixels entre $\propto_5$ et $\propto_6$ est pair :
$$\frac{1}{2}\left( \left| \left\lceil \frac{\frac{\beta}{2}+\Delta-\alpha_5}{\beta} \right\rceil - \left\lceil \frac{\frac{\beta}{2}+\Delta-\alpha_6}{\beta} \right\rceil \right| \right)$$

Si le nombre de pixels entre $\propto_5$ et $\propto_6$ est impair :
$$\frac{1}{2}\left( \left| \left\lceil \frac{\frac{\beta}{2}+\Delta-\alpha_5}{\beta} \right\rceil - \left\lceil \frac{\frac{\beta}{2}+\Delta-\alpha_6}{\beta} \right\rceil \right| - 1 \right)$$

## Cas 2 : $2I_2 < I_{max} \leq I_1 + I_2$

Ce cas décrit l'absence d'une zone du faisceau lumineux 14 intégralement formée par des sources de lumière 6 du premier type.

Nombre total de sources du deuxième type.

Le nombre total de sources de lumière 6 du deuxième type est donné par la somme du nombre de sources du deuxième type dans la zone entièrement formée par des sources du deuxième type et le nombre de sources du deuxième type dans la zone mixte.

Nombre de LED dans la zone 100% LED :

$$\left\lceil \frac{\frac{\beta}{2}+\Delta-\alpha_1}{\beta} \right\rceil - \left\lceil \frac{\frac{\beta}{2}+\Delta-\alpha_2}{\beta} \right\rceil - 1 + \left\lceil \frac{\alpha_6-\frac{\beta}{2}-\Delta}{\beta} \right\rceil - \left\lceil \frac{\alpha_5-\frac{\beta}{2}-\Delta}{\beta} \right\rceil - 1$$

Nombre de sources du deuxième type dans la zone mixte :

Si le nombre de pixels entre $\propto_2$ et $\propto_5$ est pair :
$$1 + \frac{1}{2}\left( \left| \left\lceil \frac{\frac{\beta}{2}+\Delta-\alpha_2}{\beta} \right\rceil + \left\lceil \frac{\alpha_5-\frac{\beta}{2}-\Delta}{\beta} \right\rceil \right| \right)$$

Si le nombre de pixels entre $\propto_2$ et $\propto_5$ est impair :
$$\frac{1}{2}\left( \left| \left\lceil \frac{\frac{\beta}{2}+\Delta-\alpha_2}{\beta} \right\rceil + \left\lceil \frac{\alpha_5-\frac{\beta}{2}-\Delta}{\beta} \right\rceil \right| - 1 \right)$$

Nombre total de sources du premier type.

Le nombre total de sources de lumière 6 du premier type est donné par le nombre de sources du premier type dans la zone mixte.

Nombre de sources du premier type dans la zone mixte :

Si le nombre de pixels entre $\propto_2$ et $\propto_5$ est pair :
$$\frac{1}{2}\left( \left| \left\lceil \frac{\frac{\beta}{2}+\Delta-\alpha_2}{\beta} \right\rceil + \left\lceil \frac{\alpha_5-\frac{\beta}{2}-\Delta}{\beta} \right\rceil \right| \right)$$

Si le nombre de pixels entre $\propto_2$ et $\propto_5$ est impair :
$$1 + \frac{1}{2}\left( \left| \left\lceil \frac{\frac{\beta}{2}+\Delta-\alpha_2}{\beta} \right\rceil + \left\lceil \frac{\alpha_5-\frac{\beta}{2}-\Delta}{\beta} \right\rceil \right| - 1 \right)$$

Le ratio obtenu entre les nombres de sources des premier et deuxième types permet d'optimiser la puissance utile du système d'éclairage, c'est-à-dire la puissance nécessaire pour atteindre le cahier des charges en performances. En d'autres termes, on a ajusté les puissances dans les différents modules afin de « rapprocher » le profil réel 22 du profil d'intensité 20 visé dans le cahier des charges.

On notera que plus la discrétisation du faisceau lumineux 14 est fine, c'est-à-dire plus les valeurs de $\beta$ et $\alpha_L$ sont petites, plus le rendement d'utilisation du système d'éclairage 2 s'approchera de 1 et plus le système d'éclairage 2 sera optimisé. L'optimisation est également accrue si le nombre de types de modules différents à disposition est important.

On va maintenant présenter un exemple de réalisation non limitatif de l'invention, montrant que le système d'éclairage de l'invention est particulièrement optimisé. Les hypothèses de ce mode sont les suivantes :

- le système d'éclairage comprend dix modules,
- les dimensions des moyens optiques (et donc celles des modules) sont imposées et sont telles que l'utilisation exclusive de sources de lumière du premier type ne permet pas de respecter le cahier des charges pour la performance, c'est-à-dire faire correspondre le profil 22 du faisceau lumineux 14 au profil idéal 20 imposé, et
- en sortie d'un module du premier type, comprenant uniquement des sources du premier type, lorsque ses sources de lumière 6 sont alimentées à leur courant nominal, l'intensité lumineuse vaut 35% de celle atteinte par un module du deuxième type, comprenant uniquement des sources du deuxième type, lorsque ses sources de lumière 6 sont alimentées à leur courant nominal.

Si on choisit que tous les modules sont du premier type, c'est-à-dire qu'ils comprennent tous une source de lumière du premier type, on suppose que la meilleure alimentation en courant des sources rapportée au courant nominal est la suivante : 20%, 37%, 100%, 100%, 100%, 80%, 50%, 34%, 15% et 19%, la dernière source alimentée à 19% formant une tache lumineuse d'ambiance de forme de voile de navire. Dans ce cas, le rendement d'utilisation, qui on le rappelle est défini comme étant la puissance utile rapportée à la puissance installée, vaut 56%.

Si on choisit plutôt d'opter pour le système d'éclairage de l'invention, la méthode de détermination des nombres de sources de lumière 6 des premier et second type conduit à adopter la configuration suivante :

- source 1 : type 2, alimentée à 60% du courant nominal.
- source 2 : type 2, alimentée à 100% du courant nominal.
- source 3 : type 1, alimentée à 100% du courant nominal.
- source 4 : type 1, alimentée à 100% du courant nominal.
- source 5 : type 1, alimentée à 100% du courant nominal.
- source 6 : type 1, alimentée à 80% du courant nominal.
- source 7 : type 1, alimentée à 50% du courant nominal.
- source 8 : type 1, alimentée à 35% du courant nominal.
- source 9 : type 2, alimentée à 40% du courant nominal.
- source 10 (pour obtenir une tache lumineuse d'ambiance de forme de voile de navire : type 2, alimentée à 60% du courant nominal.

Dans ce cas, le rendement d'utilisation est égal à 74%. On observe ainsi que le rendement d'utilisation est considérablement accru en passant de la première configuration à la seconde configuration. Autrement dit, on utilise de façon plus optimale la puissance installée dans le système d'éclairage.

Bien entendu, on pourra apporter de nombreuses modifications sans sortir du cadre de l'invention tel que défini par les revendications.

## Revendications

1. Système d'éclairage (2) pour véhicule automobile, pour émettre un faisceau lumineux (14) comprenant au moins deux zones éclairées chacune générée par au moins une source de lumière (6) et des moyens optiques (8) agencés de manière à former une tache lumineuse (9) à partir de la lumière émise par la source de lumière (6), dans lequel les taches lumineuses (9) ont chacune une forme générale de bande et sont toutes de formes sensiblement identiques et sensiblement parallèles à une direction principale commune et verticale, de sorte que le faisceau lumineux (14) a une forme générale de rectangle et est subdivisé en bandes rectangulaires sensiblement parallèles,

caractérisé en ce qu'il comprend au moins deux types de sources de lumière, appelés premier et deuxième types de sources de lumière, les sources de lumière (6) d'un même type ayant sensiblement une même luminance, et

la luminance d'une source de lumière (6) du premier type étant 2 à 10 fois supérieure à celle d'une source de lumière (6) du deuxième type

**2.** Système d'éclairage (2) selon la revendication précédente, dans lequel la luminance d'une source de lumière (6) du premier type est 3 à 5 fois supérieure à celle d'une source de lumière (6) du deuxième type.

**3.** Système d'éclairage (2) selon l'une quelconque des revendications précédentes, dans lequel les taches lumineuses (9) se superposent partiellement.

**4.** Système d'éclairage (2) selon la revendication précédente, dans lequel deux taches lumineuses (9) consécutives du faisceau lumineux (14) se superposent sur la moitié de la largeur des taches lumineuses (9).

**5.** Système d'éclairage (2) selon l'une quelconque des revendications 1 à 4 , dans lequel le faisceau (14) comprend au moins une zone (28) dans laquelle il est constitué d'une alternance régulière de taches (9) formées par des sources (6) du premier type et de taches (9) formées par des sources (6) du deuxième type.

**6.** Système d'éclairage (2) selon l'une quelconque des revendications précédentes, dans lequel les sources de lumière (6) du premier type sont des diodes laser.

**7.** Système d'éclairage (2) selon l'une quelconque des revendications précédentes, dans lequel les sources de lumière (6) du deuxième type sont des diodes électroluminescentes.

**8.** Système d'éclairage (2) selon l'une quelconque des revendications précédentes, dans lequel le faisceau (14) comprend, à au moins une de ses deux extrémités latérales, une tache lumineuse étendue (16) de largeur supérieure à celle des autres taches lumineuses (9).


**Patentansprüche**

**1.** Beleuchtungssystem (2) für ein Kraftfahrzeug, um einen Lichtstrahl (14) auszusenden, der mindestens zwei beleuchtete Bereiche umfasst, die jeweils von mindestens einer Lichtquelle (6) und optischen Mitteln (8) erzeugt werden, die so angeordnet sind, dass sie aus dem von der Lichtquelle (6) ausgesendeten Licht einen Lichtfleck (9) bilden,

wobei die Lichtflecken (9) jeweils eine allgemeine Streifenform aufweisen und alle im Wesentlichen gleich geformt und im Wesentlichen parallel zu einer gemeinsamen und vertikalen Hauptrichtung sind, so dass der Lichtstrahl (14) eine allgemeine Rechteckform aufweist und in im Wesentlichen parallele rechteckige Streifen unterteilt ist,

**dadurch gekennzeichnet, dass** es mindestens zwei Arten von Lichtquellen umfasst, die als erste und zweite Art von Lichtquellen bezeichnet werden, wobei Lichtquellen (6) desselben Typs im Wesentlichen dieselbe Leuchtdichte aufweisen und

die Leuchtdichte einer Lichtquelle (6) des ersten Typs 2- bis 10-mal größer ist als die einer Lichtquelle (6) des zweiten Typs.

**2.** Beleuchtungssystem (2) nach dem vorhergehenden Anspruch, wobei die Leuchtdichte einer Lichtquelle (6) des ersten Typs 3- bis 5-mal größer ist als die einer Lichtquelle (6) des zweiten Typs.

**3.** Beleuchtungssystem (2) nach einem der vorhergehenden Ansprüche, wobei sich die Lichtflecken (9) teilweise überlagern

**4.** Beleuchtungssystem (2) nach dem vorhergehenden Anspruch, wobei zwei aufeinanderfolgende Lichtflecken (9) des Lichtstrahls (14) sich über die Hälfte der Breite der Lichtflecken (9) überlagern.

**5.** Beleuchtungssystem (2) nach einem der Ansprüche 1 bis 4, wobei der Lichtstrahl (14) mindestens einen Bereich (28) umfasst, in dem er aus einer regelmäßigen Abwechslung von Flecken (9) besteht, die von Quellen (6) des ersten Typs gebildet werden, und von Flecken (9), die von Quellen (6) des zweiten Typs gebildet werden.

**6.** Beleuchtungssystem (2) nach einem der vorhergehenden Ansprüche, wobei die Lichtquellen (6) des ersten Typs Laserdioden sind.

**7.** Beleuchtungssystem (2) nach einem der vorhergehenden Ansprüche, wobei die Lichtquellen (6) des zweiten Typs Leuchtdioden sind.

**8.** Beleuchtungssystem (2) nach einem der vorhergehenden Ansprüche, wobei der Lichtstrahl (14) an mindestens einem seiner beiden seitlichen Enden einen ausgedehnten Lichtfleck (16) umfasst, der breiter ist als die anderen Lichtflecken (9).


**Claims**

**1.** Motor vehicle lighting system (2) for emitting a light beam (14) comprising at least two illuminated zones each generated by at least one light source (6) and optical means (8) adapted to form a light spot (9) from the light emitted by the light source (6), wherein the light spots (9) each have the general shape of a strip and are all of substantially identical shape and substantially parallel to a common and vertical principal direction, such that the light beam (14) has a rectangular general shape and is divided into substantially parallel rectangular strips,

> **characterized in that** it comprises at least two types of light source, termed first and second light source types, the light sources (6) of the same type having substantially the same luminance, and
> the luminance of a light source (6) of the first type being 2 to 10 times greater than that of a light source (6) of the second type.

**2.** Lighting system (2) according to the preceding claim, wherein the luminance of a light source (6) of the first type is 3 to 5 times greater than that of a light source (6) of the second type.

**3.** Lighting system (2) according to either one of the preceding claims, wherein the light spots (9) are partly superposed.

**4.** Lighting system (2) according to the preceding claim, wherein two consecutive light spots (9) of the light beam (14) are superposed over half the width of the light spots (9).

**5.** Lighting system (2) according to any one of Claims 1 to 4, wherein the beam (14) comprises at least one zone (28) in which it consists of a regular alternation of spots (9) formed by sources (6) of the first type and spots (9) formed by sources (6) of the second type.

**6.** Lighting system (2) according to any one of the preceding claims, wherein the light sources (6) of the first type are laser diodes.

**7.** Lighting system (2) according to any one of the preceding claims, wherein the light sources (6) of the second type are light-emitting diodes.

**8.** Lighting system (2) according to any one of the preceding claims, wherein the beam (14) comprises, at at least one of its two lateral ends, an extended light spot (16) of greater width than the other light spots (9).

**Fig. 1**

**Fig. 2**

**Fig. 3**

**Fig. 4**

**Fig. 5**

**RÉFÉRENCES CITÉES DANS LA DESCRIPTION**

**Documents brevets cités dans la description**

- JP 2010232044 A

- EP 2278217 A